# EUROPEAN PATENT SPECIFICATION

(11) **EP 4 063 162 B1**
(45) Date of publication and mention of the grant of the patent: **18.10.2023**
(21) Application number: 22158546.6
(22) Date of filing: 24.02.2022
(51) Int. Cl.: B60K 6/48, B60K 6/387, B60K 6/365, B60W 10/08, B60W 10/06, B60W 20/40, B60W 10/02

(54) **CONTROL METHOD, CONTROL SYSTEM OF HYBRID VEHICLE, AND HYBRID VEHICLE**
STEUERUNGSVERFAHREN, STEUERUNGSSYSTEM EINES HYBRIDFAHRZEUGS UND HYBRIDFAHRZEUG
PROCÉDÉ DE COMMANDE, SYSTÈME DE COMMANDE DE VÉHICULE HYBRIDE, ET VÉHICULE HYBRIDE

(30) Priority: 26.03.2021 JP 2021053193
(43) Date of publication of application: 28.09.2022
(73) Proprietor: Mazda Motor Corporation, Aki-gun, Hiroshima 730-8670 (JP)
(72) Inventor: FUKUDA, Yutaro, Aki-gun, Hiroshima (JP); OHSAKO, Masakazu, Aki-gun, Hiroshima (JP)
(74) Representative: Müller-Boré & Partner Patentanwälte PartG mbB

(56) References cited:
- DE-T5-112016 003 048
- FR-A1- 3 088 278
- US-A1- 2003 001 390
- US-A1- 2013 131 903
- US-A1- 2016 137 191

## Description

### TECHNICAL FIELD

The present invention relates to a control method and a control system of a hybrid vehicle including an engine and a motor as a driving source, and a friction engagement element (clutch) which switches transmission and interruption of torque between the engine and the motor.

### BACKGROUND OF THE INVENTION

Conventionally, hybrid vehicles including an engine (internal combustion engine), a motor provided downstream of the engine on a power transmission path to vehicle wheels, a clutch provided between the engine and the motor to be disengageable, are known. By switching the clutch between the released state and the engaged state, this type of hybrid vehicle is switchable of a traveling mode between a mode in which the vehicle travels using motor torque without using engine torque (EV traveling mode), and a mode in which the vehicle travels using at least the engine torque (engine traveling mode or hybrid (HV) traveling mode).

For example, JP2000-255285A discloses a technology for this kind of hybrid vehicle, in which when starting-up an engine while traveling using only a motor, the motor speed is increased while a start clutch is slip-controlled, and then when the motor speed reaches a given speed, an engine clutch is engaged. This technology aims to smoothly start the engine while suppressing fluctuation of vehicle speed due to the increase in the motor speed, and a shock during the engagement of the engine clutch.

Meanwhile, as control of the motor provided to a vehicle, two control methods as follows are generally used. One of the methods is a torque instruction control which instructs a target torque to be transmitted from the motor, and causes the motor to output the target torque. The other one is a speed instruction control which instructs a target speed of the motor, and executes a feedback-control of the motor based on a motor speed detected by a sensor so that the motor speed becomes the target speed.

In the hybrid vehicle as described above, during normal traveling, the motor is generally controlled by the torque instruction control rather than the speed instruction control. This is because the torque instruction control is high in robustness, and unlikely to be affected by disturbance such as a road gradient (slope) and a running resistance during the normal traveling. In other words, during the normal traveling, since the motor speed changes even at the fixed torque by the disturbance (e.g., the slope and the running resistance), the speed instruction control cannot be performed accurately. That is, since the motor speed is caused as a result of the actual application of the motor torque, the motor speed is difficult to be accurately controlled during the normal traveling in which the disturbance exists.

On the other hand, although the motor is controlled to crank the engine when starting the engine in a stopped state during the traveling, if the torque instruction control is applied similarly to during the normal traveling as described above, the motor may not accurately be controlled during the startup of the engine. This is because the torque of various elements (e.g., the engine, the motor, and a clutch) fluctuates during the startup of the engine. That is, with such a torque fluctuation, even if a fixed input (current) is supplied to the motor in order to output a desired torque, a fixed torque may not be outputted from the motor. Therefore, the torque instruction control is difficult to be performed accurately.

US 2003/001390 A1 relates to a strategy to start a parallel HEV powertrain engine while maintaining a smooth vehicle response to driver demand using the motor while simultaneously closing an engine disconnect clutch.

US 2016/137191 A1 relates to a method and an apparatus for controlling an engine clutch. The method includes determining whether an engine start condition is satisfied when an engine is stopped and performing an engine cranking operation by operating a hybrid starter & generator (HSG) when the engine start condition is satisfied.

FR 3 088 278 A1 relates to a method for starting a heat engine of a hybrid motor vehicle transmission chain, in which a connection clutch interposed between the heat engine and the electric motor to transmit a torque between the combustion engine and the electric motor and a main clutch inserted between the gearbox and the electric motor.

### SUMMARY OF THE INVENTION

The present invention is made in view of solving the above problems, and one purpose thereof is accurately controlling a motor during startup of an engine of the hybrid vehicle.

The invention is defined by independent claims. According to a first aspect aspect of the present invention, a method of controlling a hybrid vehicle is provided, the hybrid vehicle including an engine, a motor, a friction engagement element provided between the engine and the motor to be disengageable, and a motor speed sensor configured to detect speed of the motor. The method includes the step of shifting the friction engagement element from a released or disengaged state to one of a slipping state and an engaged state, and performing a motor control in which the engine is started using the motor, in response to a startup demand of the engine in a stopped state during traveling of the hybrid vehicle. The method includes the step of applying a first control (speed instruction control), as the motor control, in which a target speed to be set for the motor is instructed and feedback control of the motor is performed based on the speed detected by the motor speed sensor so that the motor speed becomes the target speed. The method includes the step of determining whether a motor control switching condition for switching the motor control from the first control to a second control (torque instruction control) is satisfied, the second control being a control in which a target torque to be outputted from the motor is instructed and the motor is caused to output the target torque. The method includes the step of switching the motor control from the first control to the second control when the motor control switching condition is determined to be satisfied. According to a second aspect of the invention a corresponding control system is provided.

According to the invention, when the engine startup demand is issued, as the motor control to start the engine, etc., the speed instruction control (first control) is first executed. Accordingly, under a situation where torque fluctuation occurs in the engine, the motor, the friction engagement element, etc., due to the engine startup, the motor can accurately be controlled by the speed instruction control. As a result, a shock which may be caused at the time of engine start can appropriately be suppressed. Moreover, according to this configuration, when the motor control switching condition is determined to be satisfied during the speed instruction control, the motor control is switched to the torque instruction control (second control) from the speed instruction control. Accordingly, during the normal traveling of the vehicle where disturbance such a road gradient (slope) and a running resistance occurs after the engine start, the motor can accurately be controlled by the torque instruction control. That is, by suitably switching the speed instruction control and the torque instruction control at the time of engine start, the motor can accurately be controlled.

The motor control switching condition includes a condition that, by the shifting the second friction engagement element from the slipping state to the engaged state, a differential rotation between a shaft on a motor side and a shaft on a vehicle wheel side in the second friction engagement element becomes below a given value, and a transmission torque capacity of the second friction engagement element becomes above a given capacity.

The condition described above being satisfied means that the second friction engagement element can be linearly controlled to a certain extent (i.e., the second friction engagement element transmits certain torque). Thus, by switching the motor control from the speed instruction control to the torque instruction control, the shock (torque fluctuation) which may be caused at the time of switching can appropriately be suppressed.

The motor control switching condition may include a condition that, after the startup of the engine, a difference between torque outputted from the motor by the first control, and torque to be outputted from the motor after the switching the motor control from the first control to the second control becomes below a given difference.

The condition described above being satisfied means that the speed instruction control of the motor is stabilized in a given state, particularly, a torque state of the motor is stabilized. According to this configuration, by switching the motor control from the speed instruction control to the torque instruction control at this timing, the shock (torque fluctuation) which may be caused at the time of switching can appropriately be suppressed.

The method may further include the step of shifting the friction engagement element from the released state to the slipping state in response to the startup demand of the engine, and shifting the friction engagement element from the slipping state to the engaged state after the startup of the engine. The motor control switching condition may include a condition that the shifting the friction engagement element from the slipping state to the engaged state is completed.

According to this configuration, by switching the motor control from the speed instruction control to the torque instruction control when the friction engagement element is set into the completely engaged state, the shock (torque fluctuation) which may be caused at the time of switching can appropriately be suppressed.

The hybrid vehicle may further include a powertrain system provided between the motor and a vehicle wheel and configured to transmit driving force via a gear. The motor control switching condition may include a condition that, after the startup of the engine, the gear of the powertrain system becomes in a given no-backlash state.

According to this configuration, by switching the motor control from the speed instruction control to the torque instruction control when the gear of the powertrain system is set into the given no-backlash state, the shock (torque fluctuation) which may be caused at the time of switching can appropriately be suppressed.

### BRIEF DESCRIPTION OF DRAWINGS

Fig. 1 is a diagram illustrating a schematic configuration of a hybrid vehicle according to one embodiment of the present invention.
Fig. 2 is a block diagram illustrating an electric configuration of the hybrid vehicle according to this embodiment.
Fig. 3 is a time chart illustrating one example of a startup control according to this embodiment.
Fig. 4 is a time chart illustrating another example of the startup control according to this embodiment.
Fig. 5 is a flowchart illustrating the startup control according to this embodiment.

### DETAILED DESCRIPTION OF THE INVENTION

Hereinafter, a control method and a control system of a hybrid vehicle according to one embodiment of the present invention are described with reference to the accompanying drawings. All of the features as shown in the drawings may not necessarily be essential.

### Device Configuration

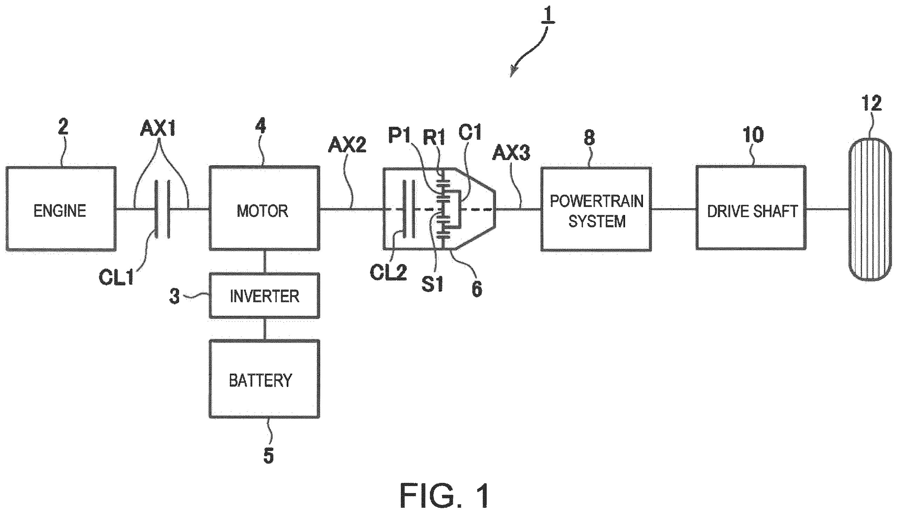

Fig. 1 is a diagram illustrating a schematic configuration of a hybrid vehicle according to this embodiment.

As illustrated in Fig. 1, a hybrid vehicle 1 mainly includes an engine 2 (e.g., a gasoline engine), a motor 4, an inverter 3, a battery 5, a transmission 6, a powertrain system 8, a drive shaft 10, and vehicle wheels (drive wheels) 12. The engine 2 generates torque for driving the hybrid vehicle 1. The motor 4 is provided downstream of the engine 2 on a power transmission path of the hybrid vehicle 1, and generates torque for driving the hybrid vehicle 1. The inverter 3 adjusts current to be supplied to the motor 4. The battery 5 sends and receives electric power to/from the motor 4 via, for example, the inverter 3. The transmission 6 is provided downstream of the motor 4 on the power transmission path of the hybrid vehicle 1, and changes a rotational speed of the engine 2 and/or the motor 4. The powertrain system 8 transmits the torque downstream from the transmission 6, and the drive shaft 10 drives the vehicle wheels 12 by the torque from the powertrain system 8.

An output shaft of the engine 2 and a rotational shaft of the motor 4 are coaxially coupled together by a shaft AX1 via a first clutch CL1 which is disengageable (disconnectable). This first clutch CL1 switches transmission and interruption of the torque between the engine 2 and the motor 4. The first clutch CL1 may be comprised of, for example, a dry multi-plate clutch or a wet multi-plate clutch which is changeable of a transmission torque capacity by a successive or phased control of a flow rate and/or a pressure of clutch hydraulic oil by a motor and a solenoid (not illustrated).

The rotational shaft of the motor 4 and a rotational shaft of the transmission 6 are coaxially coupled together by a shaft AX2. Typically, the transmission 6 is internally provided with one or more planetary gear set(s) each including a sun gear S1, a ring gear R1, a pinion gear P1 (planetary gear), and a carrier C1, and friction engagement elements (e.g., a clutch and a brake). The transmission 6 may be an automatic transmission having a function of automatically switching a gear stage (gear ratio) according to vehicle speed and engine speed. The ring gear R1 is disposed to be concentric with the sun gear S1, and the pinion gear P1 is disposed between the sun gear S1 and the ring gear R1 to mesh with the sun gear S1 and the ring gear R1. The carrier C1 holds the pinion gear P1 to be rotatable as well as revolvable about the sun gear S1.

Further, the transmission 6 may be internally provided with a second clutch CL2 which is disengageable (disconnectable). The second clutch CL2 can switch transmission and interruption of torque between the upstream side (the engine 2 and the motor 4) and the downstream side (the vehicle wheels 12, etc.) of the transmission 6. Also the second clutch CL2 may be comprised of, for example, a dry multi-plate clutch or a wet multi-plate clutch which is changeable of a transmission torque capacity by a successive or phased control of a flow rate and/or a pressure of clutch hydraulic oil by a motor or a solenoid (not illustrated). Note that, particularly, the second clutch CL2 is comprised of a plurality of clutches used for switching various gear stages in the transmission 6. Further, although Fig. 1 illustrates a single planetary gear set for simplification, actually, the transmission 6 may include one or a plurality of planetary gear sets. By selectively engaging the friction engagement elements including the plurality of clutches (e.g., the second clutch CL2) and a plurality of brakes (not illustrated) to switch the power transmission path via each planetary gear set, for example, a plurality of forward gear stages and one reverse gear stage can be achieved.

The powertrain system 8 receives torque via an output shaft AX3 of the transmission 6. The powertrain system 8 is comprised of, for example, a differential gear which dividedly supplies the driving force to a pair of left and right vehicle wheels 12, and a final gear.

The hybrid vehicle 1 as described above can switch a traveling mode by switching the engagement and release (disengagement) of the first clutch CL1. That is, the hybrid vehicle 1 includes a first traveling mode in which the first clutch CL1 is set to the released state and the hybrid vehicle 1 travels using the torque of the motor 4 without using the torque of the engine 2, and a second traveling mode in which the first clutch CL1 is set to the engaged state and the hybrid vehicle 1 travels using at least the torque of the engine 2. The first traveling mode is a so-called EV traveling mode, and the second traveling mode includes an engine traveling mode in which the hybrid vehicle 1 travels using only the torque of the engine 2, and a hybrid traveling mode (HV traveling mode) in which the hybrid vehicle 1 travels using both of the torque of the engine 2 and the torque of the motor 4.

Note that the first clutch CL1 and the second clutch CL2 are examples of a "first friction engagement element" and a "second friction engagement element" of the present invention, respectively. However, the present invention is not limited to using clutches as the first friction engagement element and the second friction engagement element.

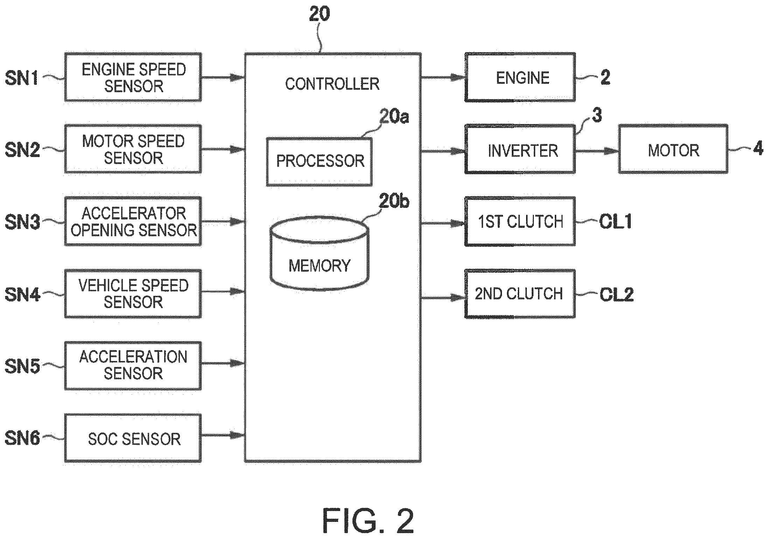

Fig. 2 is a block diagram illustrating an electric configuration of the hybrid vehicle 1 according to this embodiment.

As illustrated in Fig. 2, a controller 20 particularly receives an input of signals from an engine speed sensor SN1, a motor speed sensor SN2, an accelerator opening sensor SN3, a vehicle speed sensor SN4, an acceleration sensor SN5, and an SOC sensor SN6. The engine speed sensor SN1 detects the speed (rotational speed) of the engine 2. The motor speed sensor SN2 detects the speed (rotational speed) of the motor 4. The accelerator opening sensor SN3 detects an accelerator opening corresponding to a depressed amount of an accelerator pedal by a driver. The vehicle speed sensor SN4 detects a vehicle speed of the hybrid vehicle 1. The acceleration sensor SN5 detects an acceleration of the hybrid vehicle 1 in a front-and-rear direction. The SOC sensor SN6 detects a state of charge (SOC) of the battery 5.

The controller 20 may be comprised of a computer including one or more processor(s) 20a (typically, a central processing unit (CPU)), and memory 20b (e.g., ROM and RAM) which stores various programs which are interpretively executed on the processor 20a (including a basic control program such as an operation system (OS) and an application program actuated on the OS to implement a specific function) and various data. The controller 20 is an example of a "control device" according to the present invention, and executes a "method of controlling the hybrid vehicle" according to the present invention.

In detail, the controller 20 mainly controls the engine 2, the inverter 3, and the first and second clutches CL1 and CL2 by outputting control signals thereto based on detection signals from the sensors SN1-SN6 described above. For example, the controller 20 controls the engine 2 to adjust an ignition timing, a fuel injection timing, and a fuel injection amount, controls the motor 4 to adjust the speed and the torque, and switches the state of the first and second clutches CL1 and CL2 (the engagement state, the release state, and the slipping state). Particularly, the controller 20 controls a spark plug, a fuel injection valve, and a throttle valve of the engine 2, and controls the first and second clutches CL1 and CL2 through a hydraulic control circuit.

### Control of Hybrid Vehicle

Next, contents of control executed by the controller 20 according to this embodiment are described. In this embodiment, when the startup of the engine 2 in a stopped state is demanded during traveling of the vehicle 1, the controller 20 shifts the first clutch CL1 from the released (or disengaged) state to the slipping state or the engaged state, shifts the second clutch CL2 from the engaged state to the slipping state, and executes a motor control for starting the engine 2 by the motor 4. Note that the motor control is executed during the startup of the engine (engine startup), and the "engine startup" as used herein means not only a period of time until the completion of the startup of the stopped engine 2, but also includes a certain period of time from the completion of the startup of the engine 2. Further, the motor control includes not only control of the motor 4 to crank the engine 2 to start, but also various control of the motor 4 which is executed during the engine startup.

Particularly, in this embodiment, as the motor control to start the engine 2 by the motor 4, the controller 20 first executes a speed instruction control (first control) in which the controller 20 instructs a target speed to be set for the motor 4, and feedback-controls the motor 4 based on a motor speed detected by the motor speed sensor SN2 so that the motor speed becomes the target speed. According to this, under a situation where torque fluctuation occurs in the engine 2, the motor 4, the first and the second clutches CL1 and CL2, etc., due to the engine startup, the motor 4 can accurately be controlled by the speed instruction control.

Then, in this embodiment, when the controller 20 determines that a given condition for switching the motor control is satisfied during the speed instruction control, the controller 20 switches the motor control to a torque instruction control (second control) in which the controller 20 instructs a target torque to be outputted from the motor 4, and causes the motor 4 to output the target torque. According to this, during the normal traveling where disturbance such a road gradient (slope) and a running resistance occurs after the startup of the engine 2, the motor 4 can accurately be controlled by the torque instruction control.

Here, in the speed instruction control, the controller 20 particularly transmits a command value of the target speed to the inverter 3 via a control area network (CAN), and controls a motor torque by feedback control based on the motor speed so that the motor speed follows the target speed. In this case, the inverter 3 converts torque into current and outputs the current to the motor 4 so that a desired motor torque corresponding to the target speed is outputted from the motor 4. The motor speed changes according to the load of the motor 4 even at a fixed current, and therefore, in the speed instruction control, the feedback control is executed so that the motor speed is set to the target speed while monitoring the motor speed by the motor speed sensor SN2.

On the other hand, in the torque instruction control, the controller 20 particularly transmits a command value of the target torque to the inverter 3 via the CAN, and the inverter 3 converts the torque into current and outputs the current to the motor 4 so that the target torque is outputted from the motor 4. In this case, the current supplied to the motor 4 for the output of the desired torque changes according to the motor speed, and therefore, in the torque instruction control, the current to be supplied to the motor 4 via the inverter 3 is controlled according to the present motor speed detected by the motor speed sensor SN2.

Further, in this embodiment, as a motor control switching condition for switching the control from the speed instruction control to the torque instruction control, at least one of Conditions 1-5 as follows are used. For example, any of Conditions 1-5 is selectively applied as the motor control switching condition according to an operation state of the hybrid vehicle 1.
(1) Condition 1: Corresponding to the shift of the second clutch CL2 from the slipping state to the engaged state after the engine startup, a differential rotation of the second clutch CL2 becomes below a given value, and the transmission torque capacity of the second clutch CL2 becomes above a given capacity.
   Condition 1 is satisfied when the second clutch CL2 can be linearly controlled to a certain extent (i.e., the second clutch CL2 transmits certain torque). The differential rotation of the second clutch CL2 is a difference between a rotational speed of the shaft AX2 on the motor 4 side of the second clutch CL2, and a rotational speed of the shaft AX3 on the vehicle wheel 12 side of the second clutch CL2. The rotational speed of the shaft AX2 on the motor 4 side is acquired from the motor speed sensor SN2, and the rotational speed of the shaft AX3 on the vehicle wheel 12 side is acquired from the vehicle speed sensor SN4. Further, the transmission torque capacity of the second clutch CL2 is calculated based on, for example, a solenoid current supplied to the solenoid which actuates the second clutch CL2.
(2) Condition 2: After the engine startup, a difference between the torque outputted from the motor 4 by the speed instruction control, and torque to be outputted from the motor 4 after the switching from the speed instruction control to the torque instruction control becomes below a given difference.
   When Condition 2 is satisfied, the speed instruction control of the motor 4 is stabilized in a given state, particularly, a torque state of the motor 4 is stabilized. Therefore, when the motor control is switched in this state, the torque fluctuation during the shift from the speed instruction control to the torque instruction control can be reduced.
(3) Condition 3: The startup of the engine 2 is completed.
   When Condition 3 is satisfied, since the startup of the engine 2 is completed, the torque of the engine 2 is controllable. The completion of the startup of the engine 2 means that the engine speed reaches a given speed. Note that, in other examples, Condition 3 may alternatively be a condition that the engine speed becomes equal to the motor speed.
(4) Condition 4: After the engine startup, the shift of the first clutch CL1 from the slipping state to the engaged state is completed.
   When Condition 4 is satisfied, since the first clutch CL1 is set to a fully-engaged state, the torque and speed of each element is stabilized.
(5) Condition 5: After the engine startup, the gear in the powertrain system 8 (typically, the differential gear) is in a given no-backlash state (i.e., no gap exists between mated gear teeth).
   When Condition 5 is satisfied, since the state of the gear in the powertrain system 8 becomes the given no-backlash state, impact caused when eliminating the backlash (in detail, the impact caused when the gears contact or collide with each other) can be prevented. The given no-backlash state is one of an acceleration no-backlash state where the driving force is transmitted from the driving source side to the vehicle wheel side, and a deceleration no-backlash state where the driving force is transmitted from the vehicle wheel side to the driving source side. Which one of the acceleration no-backlash state and the deceleration no-backlash state to be applied is determined according to the target driving force of the hybrid vehicle 1, and existence of a driving force margin of the motor 4 required for the startup of the engine 2 (i.e., whether the motor 4 is in a state capable of generating torque sufficient to start the engine 2).

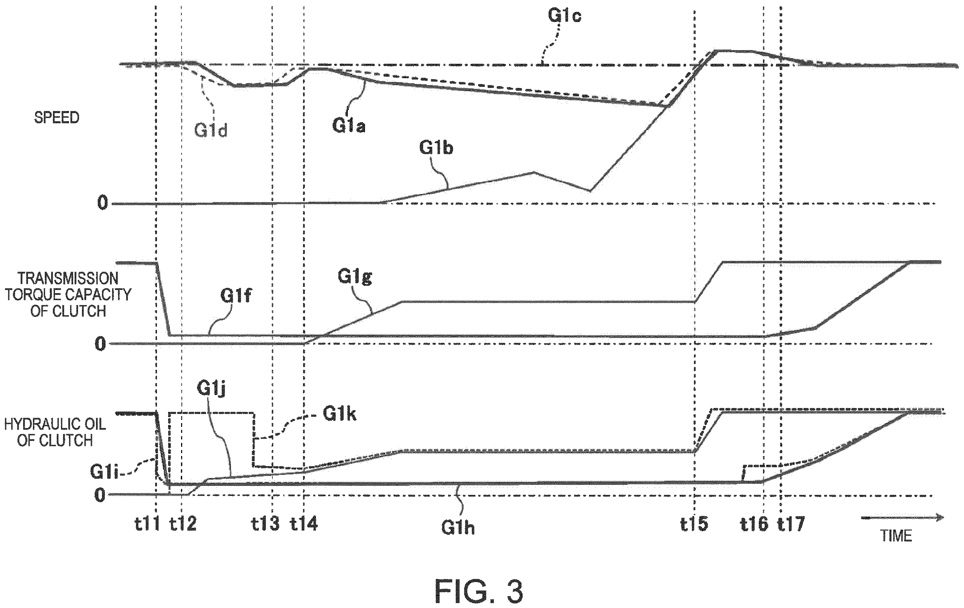

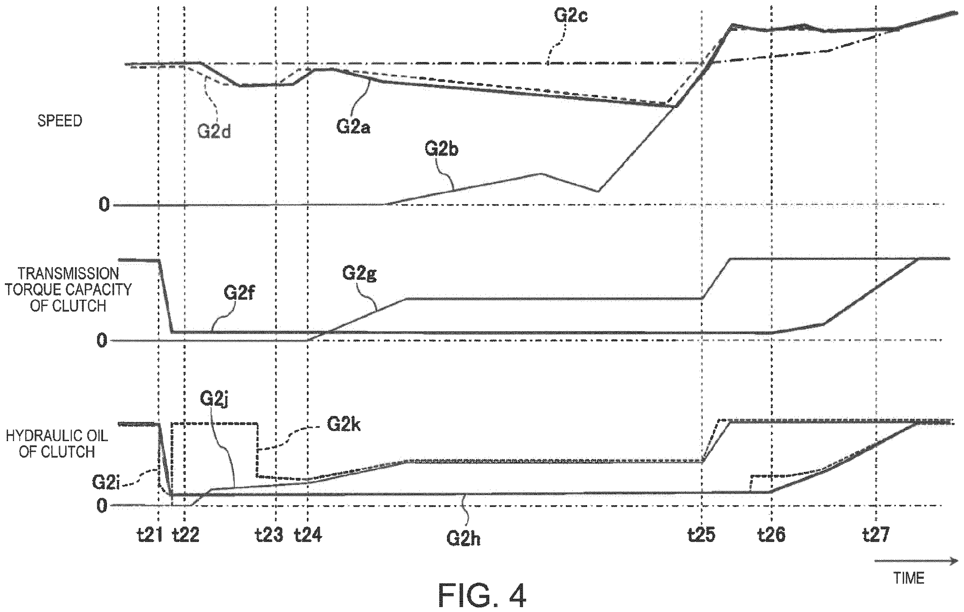

Next, various control executed during the engine startup according to this embodiment (hereinafter, simply be referred to as a "startup control") is described with reference to Figs. 3 and 4. Fig. 3 is a time chart illustrating one example of the startup control according to this embodiment.

In Fig. 3, graph G1a indicates the motor speed, graph G1b indicates the engine speed, graph G1c indicates the vehicle wheel speed (i.e., a rotational speed of the drive shaft 10), graph G1d indicates the target speed of the motor 4 (target motor speed), graph G1f indicates the transmission torque capacity of the second clutch CL2, graph G1g indicates the transmission torque capacity of the first clutch CL1, graph G1h indicates an actual hydraulic pressure of the second clutch CL2, graph G1i indicates an instruction hydraulic pressure of the second clutch CL2, graph G1j indicates an actual hydraulic pressure of the first clutch CL1, and graph G1k indicates an instruction hydraulic pressure of the first clutch CL1. Here, control is described as one example, which is executed when there is no driving force margin of the motor 4 (i.e., the motor 4 is in a state incapable of generating torque sufficient to start the engine 2), and the hybrid vehicle 1 is in an accelerating state both before and after the startup demand.

When the start of the engine 2 is demanded, the controller 20 lowers the instruction hydraulic pressure of the second clutch CL2 in a stepped manner so as to shift the second clutch CL2 in the engaged state to the slipping state (time t11). Accordingly, the actual hydraulic pressure of the second clutch CL2 decreases promptly, and the transmission torque capacity of the second clutch CL2 also decreases promptly. Then, after the controller 20 temporarily increases the instruction hydraulic pressure of the first clutch CL1 in a stepped shape, the controller 20 gradually increases the instruction hydraulic pressure of the first clutch CL1 (time t14). Accordingly, the actual hydraulic pressure of the first clutch CL1 rises gradually, and the transmission torque capacity of the first clutch CL1 increases, thus the first clutch CL1 in the released state being shifted to the slipping state.

Further, after the startup demand of the engine 2 is issued, the controller 20 executes backlash eliminating control for setting the state of the gears in the powertrain system 8 to the deceleration no-backlash state where the driving force is transmitted from the vehicle wheel side to the driving source side (time t12). In detail, the controller 20 controls the motor 4 by setting the target motor speed lower than the vehicle wheel speed such that the motor speed corresponding to the gear speed on the driving source side in the powertrain system 8 is lower than the vehicle wheel speed corresponding to the gear speed on the vehicle wheel side in the powertrain system 8. In this case, the controller 20 controls the motor 4 by setting the target motor speed such that a desired differential rotation is generated between the motor speed and the vehicle wheel speed.

When the backlash elimination between the gears in the powertrain system 8 is completed by the backlash eliminating control (i.e., when the gear state in the powertrain system 8 is set to the deceleration no-backlash state), the controller 20 maintains the deceleration no-backlash state. In detail, the controller 20 increases the target motor speed so as to reduce the differential rotation between the motor speed and the vehicle wheel speed (time t13), and then, the controller 20 sets the target motor speed so that a state of the differential rotation where the motor speed is slightly lower than the vehicle wheel speed is maintained. Thus, the gear state in the powertrain system 8 is maintained in the deceleration no-backlash state.

Next, the controller 20 controls the motor 4 to crank the engine 2 so as to start the stopped engine 2. As a result, the engine speed increases to be equal to the motor speed. In this case, the controller 20 estimates a timing at which the engine speed becomes equal to the motor speed, and starts to raise the target motor speed earlier than the timing. Note that, basically, when the engine speed becomes above a given speed, fuel is injected into a combustion chamber of the engine 2 to carry out combustion, thus the engine 2 being started.

Then, the controller 20 executes backlash eliminating control for setting the gear state in the powertrain system 8 to the acceleration no-backlash state where the driving force is transmitted from the driving source side to the vehicle wheel side (time t15). In detail, the controller 20 controls the motor 4 by setting the target motor speed higher than the vehicle wheel speed such that the motor speed corresponding to the gear speed on the driving source side in the powertrain system 8 is higher than the vehicle wheel speed corresponding to the gear speed on the vehicle wheel side in the powertrain system 8. Further, during such backlash eliminating control (time t15), the controller 20 raises the instruction hydraulic pressure of the first clutch CL1 so as to set the first clutch CL1 to the engaged state.

When the gear state in the powertrain system 8 is set to the acceleration no-backlash state by the backlash eliminating control as described above, the controller 20 maintains the acceleration no-backlash state. In detail, the controller 20 sets the target motor speed such that a differential rotation in a state where the motor speed is higher than the vehicle wheel speed is maintained, and also lowers the target motor speed so as to gradually reduce the differential rotation to be zero (in detail, the motor speed (and the engine speed) becomes equal to the vehicle wheel speed) (time t16). Moreover, the controller 20 raises the instruction hydraulic pressure of the second clutch CL2 before the completion of the backlash elimination (in detail, immediately before the time t16). According to this, after the completion of the backlash elimination, the second clutch CL2 is promptly shifted from the slipping state to the engaged state.

Here, in response to the startup demand of the engine 2, the controller 20 sets the control to be applied to the motor 4 to the speed instruction control, and then, the control of the motor 4 as described above is executed by the speed instruction control. Then, during such a speed instruction control, when Condition 2 under which the difference between the torque outputted from the motor 4 by the speed instruction control, and the torque to be outputted from the motor 4 after the switching from the speed instruction control to the torque instruction control becomes below the given difference, the controller 20 switches the motor control from the speed instruction control to the torque instruction control (time t17). When Condition 2 is satisfied, the speed instruction control of the motor 4 is stabilized in a given state (that is, the torque state of the motor 4 is stabilized), and therefore, by switching the motor control in this state, the torque fluctuation during the shift from the speed instruction control to the torque instruction control can be reduced. Note that when Condition 2 is satisfied, basically, a condition is satisfied that the motor speed is maintained to be higher than the vehicle wheel speed by a given value for a given period of time by the speed instruction control after the engine startup.

Next, Fig. 4 is a time chart illustrating another example of the startup control according to this embodiment. In Fig. 4, graphs G2a-G2k indicate the same parameters as graphs G1a-G1k in Fig. 3, respectively. In Fig. 4, control is described as one example, which is executed when there is no driving force margin of the motor 4, and the hybrid vehicle 1 is shifted from the decelerating state to the accelerating state corresponding to the startup demand (hereinafter, it may suitably be referred to as a "second startup control"). Note that, here, only a configuration different from the startup control illustrated in Fig. 3 (hereinafter, it may suitably be referred to as a "first startup control") is described, and description of a configuration similar to the first startup control is omitted.

In the second startup control, the controller 20 executes, for the large part, control similar to the first startup control (time t21-t26). However, in the second startup control, since the hybrid vehicle 1 changes from the decelerating state to the accelerating state, the controller 20 increases, after the engine startup, the target motor speed more than in the first startup control (after a time t25). Then, the controller 20 maintains the target motor speed at substantially constant until the vehicle wheel speed becomes equal to the motor speed (and the engine speed).

Further, in response to the startup demand of the engine 2, the controller 20 sets the control to be applied to the motor 4 to the speed instruction control, and then, controls the motor 4 by the speed instruction control. Further, during such speed instruction control, when Condition 1 is satisfied, under which, after the instruction hydraulic pressure of the second clutch CL2 is increased to be shifted from the slipping state to the engaged state after the engine startup (immediately before the time t26), the differential rotation of the second clutch CL2 becomes below the given value, and the transmission torque capacity of the second clutch CL2 becomes above the given capacity, the controller 20 switches the motor control from the speed instruction control to the torque instruction control (time t27). When Condition 1 is satisfied, the second clutch CL2 can be linearly controlled to a certain extent (i.e., the second clutch CL2 transmits certain torque), and therefore, by switching the motor control in this state, the torque fluctuation during the shift from the speed instruction control to the torque instruction control can be reduced. Note that, when Condition 1 is satisfied, a condition is satisfied that the vehicle wheel speed is substantially equal to the motor speed when the motor speed is maintained at substantially constant after being increased higher than the vehicle wheel speed by the speed instruction control after the engine startup.

Note that although in Fig. 3 Condition 2 is applied as the motor control switching condition in the first startup control, in other examples, any of Conditions 1, 3, 4, and 5 may be applied as the motor control switching condition in the first startup control. That is, in the first startup control, the motor control may be switched from the speed instruction control to the torque instruction control when any one of the conditions is satisfied among (Condition 1) the differential rotation of the second clutch CL2 becomes below the given value, and the transmission torque capacity of the second clutch CL2 becomes above the given capacity, (Condition 3) the startup of the engine 2 is completed (or the engine speed becomes equal to the motor speed), (Condition 4) the shift of the first clutch CL1 from the slipping state to the engaged state is completed, and (Condition 5) the gear state in the powertrain system 8 becomes in the acceleration no-backlash state.

Further, although in Fig. 4, Condition 1 is applied as the motor control switching condition in the second startup control, in other examples, any of Conditions 2, 3, 4, and 5 may be applied as the motor control switching condition in the second startup control. That is, in the second startup control, the motor control may be switched from the speed instruction control to the torque instruction control when any one of the conditions is satisfied among (Condition 2) the difference between the torque outputted from the motor 4 by the speed instruction control, and the torque to be outputted from the motor 4 after the switching from the speed instruction control to the torque instruction control becomes below the given difference, (Condition 3) the startup of the engine 2 is completed (or the engine speed becomes equal to the motor speed), (Condition 4) the shift of the first clutch CL1 from the slipping state to the engaged state is completed, and (Condition 5) the state of the gear in the powertrain system 8 becomes in the acceleration no-backlash state.

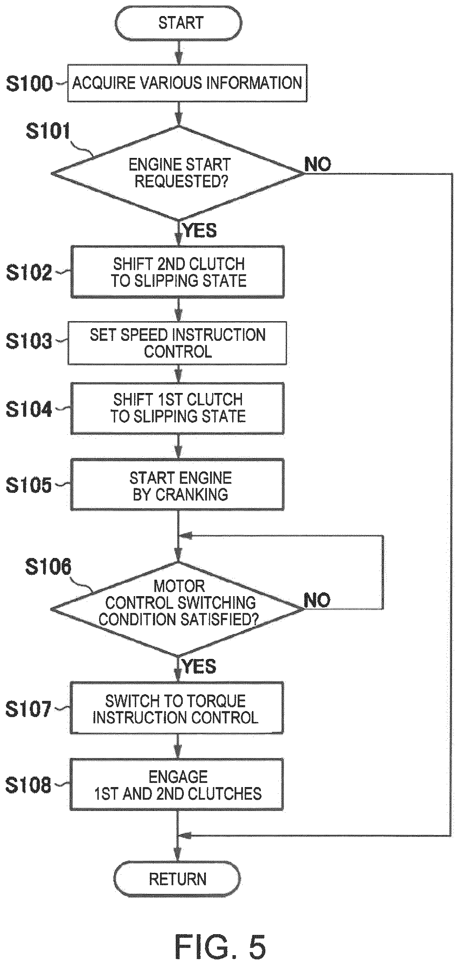

Next, the overall flow of the startup control of the engine 2 according to this embodiment is described with reference to Fig. 5. Fig. 5 is a flowchart illustrating the startup control according to this embodiment. This flow is repeatedly executed by the controller 20 at a given cycle. All of the steps as shown in Fig. 5 may not necessarily be essential.

First, at Step S100, the controller 20 particularly acquires various information. For example, the controller 20 acquires the detection signals at least from the sensors SN1-SN6 described above.

Next, at Step S101, the controller 20 particularly determines whether the startup of the currently stopped engine 2 is demanded. For example, this startup demand is issued when the driver demands a comparatively large acceleration in the EV traveling mode (i.e., the driver demands acceleration which requires the switching of the traveling mode from the EV traveling mode to the HV traveling mode). Further, other than the demand from the driver, the startup demand may be issued from a control system including the powertrain (hereinafter, this startup demand may suitably be referred to as a "system demand"). This system demand may be issued when the switching of the traveling mode from the EV traveling mode to the HV traveling mode is required according to the vehicle speed, the load, the battery state, and the engine temperature. For example, the system demand may be issued when the driving force of only the motor 4 is insufficient to achieve the target driving force, when the battery 5 requires charging (when the SOC of the battery 5 is below a given value), and when engine braking by the engine 2 is required during deceleration.

At Step S101, if the controller 20 determines that the startup demand is not issued (Step S101: NO), the controller 20 ends the processing related to the startup control. On the other hand, if the controller 20 determines that the startup demand is issued (Step S101: YES), the controller 20 proceeds to Step S102. At Step S102, the controller 20 particularly starts shifting of the second clutch CL2 from the engaged state to the given slipping state. In detail, the controller 20 particularly starts to lower the instruction hydraulic pressure for controlling the hydraulic pressure of the second clutch CL2.

Next, at Step S103, the controller 20 particularly sets the speed instruction control as the control to be applied to the motor 4. In detail, the controller 20 particularly transmits the command value of the target speed to the inverter 3 via the CAN, and controls the motor torque by using the feedback control based on the motor speed detected by the motor speed sensor SN2 so that the motor speed follows the target speed. In this case, the inverter 3 converts torque into current and outputs the current to the motor 4 so that the desired motor torque corresponding to the target speed is outputted from the motor 4.

Then, at Step S104, the controller 20 particularly starts shifting of the first clutch CL1 to the given slipping state. In detail, the controller 20 particularly starts to raise the instruction hydraulic pressure for controlling the hydraulic pressure of the first clutch CL1. Note that during the engine startup, the first clutch CL1 is not limited to be shifted to the slipping state, but may be shifted to the engaged state without through the slipping state.

When the shift of the first and second clutches CL1 and CL2 to the given slipping state is completed by the control as described above, the controller 20 proceeds to Step S105. At Step S105, the controller 20 controls the motor 4 to crank the engine 2 to start. Then, when the engine 2 starts, the controller 20 proceeds to Step S106.

At Step S106, the controller 20 particularly determines whether the motor control switching condition is satisfied. In detail, the controller 20 particularly applies any of Conditions 1-5 as the motor control switching condition, and determines whether the condition is satisfied. For example, the controller 20 may select any one of Conditions 1-5 according to a control content executed during the engine startup. In this case, the control content executed during the engine startup changes according to, for example, the acceleration/deceleration state before the startup demand, the acceleration/deceleration state after the startup demand, and the existence of the driving force margin of the motor 4 (these states affect, for example, the content of the backlash eliminating control of the powertrain system 8 during the engine startup).

Note that the condition to be used is not limited to one of Conditions 1-5, but may be two or more of Conditions 1-5, and the motor control switching condition may be determined to be satisfied when all of the two or more conditions are satisfied.

At Step S106, if the controller 20 determines that the motor control switching condition is not satisfied (Step S106: NO), the controller 20 repeats Step S106. In this case, the controller 20 repeats the determination at Step S106 until the motor control switching condition is satisfied. On the other hand, if the controller 20 determines that the motor control switching condition is satisfied (Step S106: YES), the controller 20 proceeds to Step S107. At Step S107, the controller 20 particularly switches the control to be applied to the motor 4 from the speed instruction control to the torque instruction control. In detail, the controller 20 particularly transmits the command value of the target torque to the inverter 3 via the CAN, and the inverter 3 converts the torque into current and outputs the current to the motor 4 so that the target torque is outputted from the motor 4. In this case, the current to be supplied to the motor 4 via the inverter 3 is controlled according to the present motor speed detected by the motor speed sensor SN2.

Next, at Step S108, the controller 20 particularly controls the first and second clutches CL1 and CL2 to be shifted from the slipping state to the engaged state. In detail, the controller 20 particularly raises the instruction hydraulic pressures for controlling the hydraulic pressures of the first and second clutches CL1 and CL2. Then, the controller 20 ends the processing related to the startup control.

### Operation and Effects

Operation and effects of the control method and the control system of the hybrid vehicle 1 according to this embodiment are described.

According to this embodiment, when the startup demand of the engine 2 is issued, the controller 20 first applies the speed instruction control as the motor control which is executed for the engine startup. Therefore, under the situation where the torque fluctuation is caused to the engine 2, the motor 4, the first and second clutches CL1 and CL2, etc. due to the engine start, the motor 4 can accurately be controlled by the speed instruction control. Further, according to this embodiment, when the controller 20 determines that the given motor control switching condition is satisfied during the speed instruction control, the controller 20 switches the control applied as the motor control from the speed instruction control to the torque instruction control. Therefore, after the startup of the engine 2, during the normal traveling where the disturbance (e.g., the slope and the running resistance) occurs, the motor 4 can accurately be controlled by the torque instruction control.

Further, according to this embodiment, the controller 20 uses, as the motor control switching condition for the switching from the speed instruction control executed as described above to the torque instruction control, at least any one of conditions including Condition 1: the differential rotation of the second clutch CL2 becomes below the given value corresponding to the shift of the second clutch CL2 from the slipping state to the engaged state after the engine startup, and the transmission torque capacity of the second clutch CL2 becomes above the given capacity, Condition 2: after the engine startup, the difference between the torque outputted from the motor 4 by the speed instruction control, and the torque to be outputted from the motor 4 after the switching from the speed instruction control to the torque instruction control becomes below the given difference, Condition 3: the startup of the engine 2 is completed, Condition 4: after the engine startup, the shift of the first clutch CL1 from the slipping state to the engaged state is completed, and Condition 5: after the engine startup, the gear state in the powertrain system 8 becomes in the given no-backlash state. By switching the motor control from the speed instruction control to the torque instruction control based on such Conditions 1-5, the shock (torque fluctuation) which may be caused at the time of switching can appropriately be suppressed.

It should be understood that the embodiments herein are illustrative and not restrictive, since the scope of the invention is defined by the appended claims rather than by the description preceding them.

### DESCRIPTION OF REFERENCE CHARACTERS

- 1: Hybrid Vehicle
- 2: Engine
- 3: Inverter
- 4: Motor
- 5: Battery
- 6: Transmission
- 8: Powertrain System
- 12: Vehicle Wheels
- 20: Controller (Control Device)
- CL1: First Clutch (First Friction Engagement Element)
- CL2: Second Clutch (Second Friction Engagement Element)
- SN2: Motor Speed Sensor

## Claims

1. A method of controlling a hybrid vehicle (1) including an engine (2), a motor (4), a friction engagement element provided between the engine (2) and the motor (4) to be disengageable, and a motor speed sensor (SN2) configured to detect speed of the motor (4), the method comprising the steps of:
shifting the friction engagement element from a released or disengaged state to one of a slipping state and an engaged state, and performing a motor control in which the engine (2) is started using the motor (4) in response to a startup demand of the engine (2) in a stopped state during traveling of the hybrid vehicle (1);
applying, as the motor control, a first control in which a target speed to be set for the motor (4) is instructed and feedback control of the motor (4) is performed based on the speed detected by the motor speed sensor (SN2) so that the motor speed becomes the target speed;
determining whether a motor control switching condition for switching the motor control from the first control to a second control is satisfied, the second control being a control in which a target torque to be outputted from the motor (4) is instructed and the motor (4) is caused to output the target torque; and
switching the motor control from the first control to the second control when the motor control switching condition is determined to be satisfied,
wherein the friction engagement element is a first friction engagement element (CL1), and the hybrid vehicle (1) further includes a second friction engagement element (CL2) different from the first friction engagement element (CL1) and provided between the motor (4) and a vehicle wheel (12) to be disengageable,
**characterized by**
the method further comprising the step of shifting the second friction engagement element (CL2) from an engaged state to a slipping state in response to the startup demand of the engine (2), and shifting the second friction engagement element (CL2) from the slipping state to the engaged state after the startup of the engine (2),
wherein the motor control switching condition includes a condition that, by the shifting the second friction engagement element (CL2) from the slipping state to the engaged state, a differential rotation between a shaft on a motor side and a shaft on a vehicle wheel (12) side in the second friction engagement element (CL2) becomes below a given value, and a transmission torque capacity of the second friction engagement element (CL2) becomes above a given capacity.

2. The method of claim 1, wherein the motor control switching condition includes a condition that, after the startup of the engine (2), a difference between torque outputted from the motor (4) by the first control, and torque to be outputted from the motor (4) after the switching the motor control from the first control to the second control becomes below a given difference.

3. The method of any one of the preceding claims, further comprising the step of shifting the friction engagement element from the released state to the slipping state in response to the startup demand of the engine (2), and shifting the friction engagement element from the slipping state to the engaged state after the startup of the engine (2),
wherein the motor control switching condition includes a condition that the shifting the friction engagement element from the slipping state to the engaged state is completed.

4. The method of any one of the preceding claims,
wherein the hybrid vehicle (1) further includes a powertrain system (8) provided between the motor (4) and a vehicle wheel (12) and configured to transmit driving force via a gear, and
wherein the motor control switching condition includes a condition that, after the startup of the engine (2), the gear of the powertrain system (8) becomes in a given no-backlash state.

5. A control system of a hybrid vehicle (1), comprising:
an engine (2);
a motor (4);
a friction engagement element provided between the engine (2) and the motor (4) to be disengageable;
a motor speed sensor (SN2) configured to detect speed of the motor (4); and
a control device (20) configured to control the engine (2), the motor (4), and the friction engagement element,
wherein
the control device (20) is configured to:
shift the friction engagement element from a released or disengaged state to one of a slipping state and an engaged state, and execute a motor control in which the engine (2) is started using the motor (4) in response to a startup demand of the engine (2) in a stopped state during traveling of the hybrid vehicle (1),
apply, as the motor control, a first control in which a target speed to be set for the motor (4) is instructed, and feedback control of the motor (4) is executed based on the speed detected by the motor speed sensor (SN2) so that the motor speed becomes the target speed;
determine whether a motor control switching condition for switching the motor control from the first control to a second control is satisfied, the second control being a control in which a target torque to be outputted from the motor (4) is instructed and the motor (4) is caused to output the target torque; and
switch the motor control from the first control to the second control when the motor control switching condition is determined to be satisfied,
the friction engagement element is a first friction engagement element (CL1),
the control system further includes a second friction engagement element (CL2) different from the first friction engagement element (CL1) and provided between the motor (4) and a vehicle wheel (12) to be disengageable,
**characterized in that**
the control device (20) is configured to shift the second friction engagement element (CL2) from an engaged state to a slipping state in response to the startup demand of the engine (2), and to shift the second friction engagement element (CL2) from the slipping state to the engaged state after the startup of the engine (2), and
the motor control switching condition includes a condition that, by the shifting the second friction engagement element (CL2) from the slipping state to the engaged state, a differential rotation between a shaft on a motor side and a shaft on a vehicle wheel (12) side in the second friction engagement element (CL2) becomes below a given value, and a transmission torque capacity of the second friction engagement element (CL2) becomes above a given capacity.

6. The control system of claim 5, wherein the motor control switching condition includes a condition that, after the startup of the engine (2), a difference between torque outputted from the motor (4) by the first control, and torque to be outputted from the motor (4) after the switching the motor control from the first control to the second control becomes below a given difference.

7. The control system of claim 5 or 6, wherein the control device (20) is configured to shift the friction engagement element from the released state to the slipping state in response to the startup demand of the engine (2), and to shift the friction engagement element from the slipping state to the engaged state after the startup of the engine (2),
wherein the motor control switching condition includes a condition that the shifting the friction engagement element from the slipping state to the engaged state is completed.

8. The control system of any one of claims 5 to 7, further comprising a powertrain system (8) provided between the motor (4) and a vehicle wheel (12) and configured to transmit driving force via a gear,
wherein the motor control switching condition includes a condition that, after the startup of the engine (2), the gear of the powertrain system (8) becomes in a given no-backlash state.

9. A hybrid vehicle (1) comprising the control system of any one of claims 5 to 8.

## Patentansprüche

1. Verfahren zum Steuern eines Hybridfahrzeugs (1), aufweisend einen Verbrennungsmotor (2), einen Motor (4), ein Reibungseingriffselement, das zwischen dem Verbrennungsmotor (2) und dem Motor (4) bereitgestellt ist, um lösbar zu sein, und einen Motordrehzahlsensor (SN2), der konfiguriert ist, eine Drehzahl des Motors (4) zu detektieren, wobei das Verfahren umfasst die Schritte:
Umschalten des Reibungseingriffselements von einem freigegebenen oder gelösten Zustand in einen Schlupfzustand oder einen Eingriffszustand, und Durchführen einer Motorsteuerung, bei der der Verbrennungsmotor (2) unter Verwendung des Motors (4) als Reaktion auf eine Startanforderung des Verbrennungsmotors (2) in einem gestoppten Zustand während der Fahrt des Hybridfahrzeugs (1) gestartet wird;
Anwenden, als die Motorsteuerung, einer ersten Steuerung, bei der eine für den Motor (4) einzustellende Solldrehzahl angewiesen wird und eine Rückkopplungssteuerung des Motors (4) basierend auf der durch den Motordrehzahlsensor (SN2) detektierten Drehzahl erfolgt, sodass die Motordrehzahl die Solldrehzahl wird;
Bestimmen, ob eine Motorsteuerungs-Umschaltbedingung zum Umschalten der Motorsteuerung von der ersten Steuerung in eine zweite Steuerung erfüllt ist, wobei die zweite Steuerung eine Steuerung ist, bei der ein von dem Motor (4) auszugebendes Solldrehmoment angewiesen wird und der Motor (4) veranlasst wird, das Solldrehmoment auszugeben; und
Umschalten der Motorsteuerung von der ersten Steuerung in die zweite Steuerung, wenn bestimmt wird, dass die Motorsteuerungs-Umschaltbedingung erfüllt ist,
wobei das Reibungseingriffselement ein erstes Reibungseingriffselement (CL1) ist und das Hybridfahrzeug (1) ferner ein zweites Reibungseingriffselement (CL2) aufweist, das sich von dem ersten Reibungseingriffselement (CL1) unterscheidet und zwischen dem Motor (4) und einem Fahrzeugrad (12) bereitgestellt ist, um lösbar zu sein,
**dadurch gekennzeichnet, dass**
das Verfahren ferner den Schritt des Umschaltens des zweiten Reibungseingriffselements (CL2) von einem Eingriffszustand in einen Schlupfzustand als Reaktion auf die Startanforderung des Verbrennungsmotors (2) und des Umschaltens des zweiten Reibungseingriffselements (CL2) von dem Schlupfzustand in den Eingriffszustand nach dem Start des Verbrennungsmotors (2) umfasst,
wobei die Motorsteuerungs-Umschaltbedingung eine Bedingung umfasst, dass durch das Umschalten des zweiten Reibungseingriffselements (CL2) von dem Schlupfzustand in den Eingriffszustand eine differentielle Rotation zwischen einer Welle auf einer Seite des Motors und einer Welle auf einer Seite des Fahrzeugrads (12) in dem zweiten Reibungseingriffselement (CL2) unter einen gegebenen Wert fällt und eine Übertragungsdrehmomentkapazität des zweiten Reibungseingriffselements (CL2) über eine gegebene Kapazität steigt.

2. Verfahren nach Anspruch 1, wobei die Motorsteuerungs-Umschaltbedingung eine Bedingung umfasst, dass nach dem Starten des Verbrennungsmotors (2) eine Differenz zwischen dem von dem Motor (4) durch die erste Steuerung ausgegebenen Drehmoment und dem von dem Motor (4) nach dem Umschalten der Motorsteuerung von der ersten Steuerung in die zweite Steuerung auszugebenden Drehmoment unter eine gegebene Differenz fällt.

3. Verfahren nach einem der vorhergehenden Ansprüche, ferner umfassend den Schritt des Umschaltens des Reibungseingriffselements von dem freigegebenen Zustand in den Schlupfzustand als Reaktion auf die Startanforderung des Verbrennungsmotors (2) und des Umschaltens des Reibungseingriffselements von dem Schlupfzustand in den Eingriffszustand nach dem Starten des Verbrennungsmotors (2),
wobei die Motorsteuerungs-Umschaltbedingung eine Bedingung umfasst, dass das Umschalten des Reibungseingriffselements von dem Schlupfzustand in den Eingriffszustand abgeschlossen ist.

4. Verfahren nach einem der vorhergehenden Ansprüche,
wobei das Hybridfahrzeug (1) ferner ein Antriebsstrangsystem (8) aufweist, das zwischen dem Motor (4) und einem Fahrzeugrad (12) bereitgestellt und konfiguriert ist, Antriebskraft über ein Getriebe zu übertragen, und
wobei die Motorsteuerungs-Umschaltbedingung eine Bedingung umfasst, dass nach dem Starten des Verbrennungsmotors (2) das Getriebe des Antriebsstrangsystems (8) in einen gegebenen spielfreien Zustand übergeht.

5. Steuerungssystem für ein Hybridfahrzeug (1), aufweisend:
einen Verbrennungsmotor (2);
einen Motor (4),
ein Reibungseingriffselement, das zwischen dem Verbrennungsmotor (2) und dem Motor (4) bereitgestellt ist, um lösbar zu sein;
einen Motordrehzahlsensor (SN2), der konfiguriert ist, eine Drehzahl des Motors (4) zu detektieren, und
eine Steuerungsvorrichtung (20), die konfiguriert ist, den Verbrennungsmotor (2), den Motor (4) und das Reibungseingriffselement zu steuern,
wobei
die Steuerungsvorrichtung (20) konfiguriert ist:
das Reibungseingriffselement von einem freigegebenen oder gelösten Zustand in einen Schlupfzustand oder einen Eingriffszustand umzuschalten und eine Motorsteuerung auszuführen, bei der der Verbrennungsmotor (2) unter Verwendung des Motors (4) als Reaktion auf eine Startanforderung des Verbrennungsmotors (2) in einem gestoppten Zustand während der Fahrt des Hybridfahrzeugs (1) gestartet wird,
als die Motorsteuerung eine erste Steuerung anzuwenden, bei der eine für den Motor (4) einzustellende Solldrehzahl angewiesen wird und eine Rückkopplungssteuerung des Motors (4) basierend auf der durch den Motordrehzahlsensor (SN2) detektierten Drehzahl ausgeführt wird, sodass die Motordrehzahl die Solldrehzahl wird;
zu bestimmen, ob eine Motorsteuerungs-Umschaltbedingung zum Umschalten der Motorsteuerung von der ersten Steuerung in eine zweite Steuerung erfüllt ist, wobei die zweite Steuerung eine Steuerung ist, bei der ein von dem Motor (4) auszugebendes Solldrehmoment angewiesen wird und der Motor (4) veranlasst wird, das Solldrehmoment auszugeben; und
die Motorsteuerung von der ersten Steuerung in die zweite Steuerung umzuschalten, wenn bestimmt wird, dass die Motorsteuerungs-Umschaltbedingung erfüllt ist,
das Reibungseingriffselement ein erstes Reibungseingriffselement (CL1) ist,
das Steuerungssystem ferner ein zweites Reibungseingriffselement (CL2) aufweist, das sich von dem ersten Reibungseingriffselement (CL1) unterscheidet und zwischen dem Motor (4) und einem Fahrzeugrad (12) bereitgestellt ist, um lösbar zu sein,
**dadurch gekennzeichnet, dass**
die Steuerungsvorrichtung (20) konfiguriert ist, das zweite Reibungseingriffselement (CL2) von einem Eingriffszustand in einen Schlupfzustand als Reaktion auf die Startanforderung des Verbrennungsmotors (2) umzuschalten und das zweite Reibungseingriffselement (CL2) von dem Schlupfzustand in den Eingriffszustand nach dem Start des Verbrennungsmotors (2) umzuschalten,
die Motorsteuerungs-Umschaltbedingung eine Bedingung umfasst, dass durch das Umschalten des zweiten Reibungseingriffselements (CL2) von dem Schlupfzustand in den Eingriffszustand eine differentielle Rotation zwischen einer Welle auf einer Seite des Motors und einer Welle auf einer Seite des Fahrzeugrads (12) in dem zweiten Reibungseingriffselement (CL2) unter einen gegebenen Wert fällt und eine Übertragungsdrehmomentkapazität des zweiten Reibungseingriffselements (CL2) über eine gegebene Kapazität steigt.

6. Steuerungssystem nach Anspruch 5, wobei die Motorsteuerungs-Umschaltbedingung eine Bedingung umfasst, dass nach dem Starten des Verbrennungsmotors (2) eine Differenz zwischen dem von dem Motor (4) durch die erste Steuerung ausgegebenen Drehmoment und dem von dem Motor (4) nach dem Umschalten der Motorsteuerung von der ersten Steuerung in die zweite Steuerung auszugebenden Drehmoment unter eine gegebene Differenz fällt.

7. Steuerungssystem nach Anspruch 5 oder 6, wobei die Steuerungsvorrichtung (20) konfiguriert ist, das Reibungseingriffselement als Reaktion auf die Startanforderung des Verbrennungsmotors (2) von dem freigegebenen Zustand in den Schlupfzustand umzuschalten und das Reibungseingriffselement nach dem Starten des Verbrennungsmotors (2) von dem Schlupfzustand in den Eingriffszustand umzuschalten,
wobei die Motorsteuerungs-Umschaltbedingung eine Bedingung umfasst, dass das Umschalten des Reibungseingriffselements von dem Schlupfzustand in den Eingriffszustand abgeschlossen ist.

8. Steuerungssystem nach einem der Ansprüche 5 bis 7, ferner aufweisend ein Antriebsstrangsystem (8), das zwischen dem Motor (4) und einem Fahrzeugrad (12) bereitgestellt ist und konfiguriert ist, Antriebskraft über ein Getriebe zu übertragen,
wobei die Motorsteuerungs-Umschaltbedingung eine Bedingung umfasst, dass nach dem Starten des Verbrennungsmotors (2) das Getriebe des Antriebsstrangsystems (8) in einen gegebenen spielfreien Zustand übergeht.

9. Hybridfahrzeug (1), aufweisend das Steuerungssystem nach einem der Ansprüche 5 bis 8.

## Revendications

1. Procédé de commande d'un véhicule hybride (1) incluant un moteur à combustible (2), un moteur (4), un élément d'engagement par friction prévu entre le moteur à combustible (2) et le moteur (4) pour être désengageable, et un capteur de vitesse du moteur (SN2) configuré pour détecter la vitesse du moteur (4), le procédé comprenant les étapes suivantes :
le passage de l'élément d'engagement par friction d'un état libéré ou désengagé à l'un parmi un état de glissement et un état engagé, et la réalisation d'une commande de moteur dans laquelle le moteur à combustible (2) est démarré à l'aide du moteur (4) en réponse à une demande de démarrage du moteur à combustible (2) dans un état arrêté pendant le déplacement du véhicule hybride (1) ;
l'application, en tant que commande de moteur, d'une première commande dans laquelle une vitesse cible à définir pour le moteur (4) est indiquée et une commande de rétroaction du moteur (4) est réalisée sur la base de la vitesse détectée par le capteur de vitesse du moteur (SN2) de telle sorte que la vitesse du moteur devienne la vitesse cible ;
la détermination de si une condition de commutation de la commande de moteur pour commuter la commande de moteur de la première commande à une deuxième commande est satisfaite, la deuxième commande étant une commande dans laquelle un couple cible à délivrer par le moteur (4) est indiqué et le moteur (4) est amené à délivrer le couple cible ; et
la commutation de la commande de moteur de la première commande à la deuxième commande lorsque la condition de commutation de la commande de moteur est déterminée comme étant satisfaite,
l'élément d'engagement par friction étant un premier élément d'engagement par friction (CL1), et le véhicule hybride (1) incluant en outre un deuxième élément d'engagement par friction (CL2) différent du premier élément d'engagement par friction (CL1) et prévu entre le moteur (4) et une roue du véhicule (12) pour être désengageable,
**caractérisé en ce que**
le procédé comprend en outre l'étape de passage du deuxième élément d'engagement par friction (CL2) d'un état engagé à un état de glissement en réponse à la demande de démarrage du moteur à combustible (2), et de passage du deuxième élément d'engagement par friction (CL2) de l'état de glissement à l'état engagé après le démarrage du moteur à combustible (2),
la condition de commutation de la commande de moteur incluant une condition selon laquelle, par le passage du deuxième élément d'engagement par friction (CL2) de l'état de glissement à l'état engagé, une rotation différentielle entre un arbre d'un côté du moteur et un arbre d'un côté d'une roue du véhicule (12) dans le deuxième élément d'engagement par friction (CL2) devient inférieure à une valeur donnée, et une capacité de couple de transmission du deuxième élément d'engagement par friction (CL2) devient supérieure à une capacité donnée.

2. Procédé selon la revendication 1, la condition de commutation de la commande de moteur incluant une condition selon laquelle, après le démarrage du moteur à combustible (2), une différence entre le couple délivré par le moteur (4) par la première commande, et le couple à délivrer par le moteur (4) après la commutation de la commande de moteur de la première commande à la deuxième commande devient inférieure à une différence donnée.

3. Procédé selon l'une quelconque des revendications précédentes, comprenant en outre l'étape de passage l'élément d'engagement par friction de l'état libéré à l'état de glissement en réponse à la demande de démarrage du moteur à combustible (2), et de passage de l'élément d'engagement par friction de l'état de glissement à l'état engagé après le démarrage du moteur à combustible (2),
la condition de commutation de la commande de moteur incluant une condition selon laquelle le passage de l'élément d'engagement par friction de l'état de glissement à l'état engagé est achevé.

4. Procédé selon l'une quelconque des revendications précédentes,
le véhicule hybride (1) incluant en outre un système de groupe propulseur (8) prévu entre le moteur (4) et une roue du véhicule (12) et configuré pour transmettre la force motrice par l'intermédiaire d'un engrenage, et
la condition de commutation de la commande de moteur incluant une condition selon laquelle, après le démarrage du moteur à combustible (2), l'engrenage du système de groupe propulseur (8) devient dans un état donné sans jeu d'engrènement.

5. Système de commande d'un véhicule hybride (1), comprenant :
un moteur à combustible (2) ;
un moteur (4) ;
un élément d'engagement par friction prévu entre le moteur à combustible (2) et le moteur (4) pour être désengageable ;
un capteur de vitesse du moteur (SN2) configuré pour détecter la vitesse du moteur (4) ; et
un dispositif de commande (20) configuré pour commander le moteur à combustible (2), le moteur (4) et l'élément d'engagement par friction,
le dispositif de commande (20) étant configuré pour :
faire passer l'élément d'engagement par friction d'un état libéré ou désengagé à l'un parmi un état de glissement et un état engagé, et réaliser une commande de moteur dans laquelle le moteur à combustible (2) est démarré à l'aide du moteur (4) en réponse à une demande de démarrage du moteur à combustible (2) dans un état arrêté pendant le déplacement du véhicule hybride (1),
appliquer, en tant que commande de moteur, une première commande dans laquelle une vitesse cible à définir pour le moteur (4) est indiquée, et une commande de rétroaction du moteur (4) est exécutée sur la base de la vitesse détectée par le capteur de vitesse du moteur (SN2) de telle sorte que la vitesse du moteur devienne la vitesse cible ;
déterminer si une condition de commutation de la commande de moteur pour commuter la commande de moteur de la première commande à une deuxième commande est satisfaite, la deuxième commande étant une commande dans laquelle un couple cible à délivrer par le moteur (4) est indiqué et le moteur (4) est amené à délivrer le couple cible ; et
commuter la commande de moteur de la première commande à la deuxième commande lorsque la condition de commutation de la commande de moteur est déterminée comme étant satisfaite,
l'élément d'engagement par friction étant un premier élément d'engagement par friction (CL1),
le système de commande incluant en outre un deuxième élément d'engagement par friction (CL2) différent du premier élément d'engagement par friction (CL1) et prévu entre le moteur (4) et une roue du véhicule (12) pour être désengageable,
**caractérisé en ce que**
le dispositif de commande (20) est configuré pour faire passer le deuxième élément d'engagement par friction (CL2) d'un état engagé à un état de glissement en réponse à la demande de démarrage du moteur à combustible (2), et pour faire passer le deuxième élément d'engagement par friction (CL2) de l'état de glissement à l'état engagé après le démarrage du moteur à combustible (2), et
la condition de commutation de la commande de moteur inclut une condition selon laquelle, par le passage du deuxième élément d'engagement par friction (CL2) de l'état de glissement à l'état engagé, une rotation différentielle entre un arbre d'un côté du moteur et un arbre d'un côté d'une roue du véhicule (12) dans le deuxième élément d'engagement par friction (CL2) devient inférieure à une valeur donnée, et une capacité de couple de transmission du deuxième élément d'engagement par friction (CL2) devient supérieure à une capacité donnée.

6. Système de commande selon la revendication 5, la condition de commutation de la commande de moteur incluant une condition selon laquelle, après le démarrage du moteur à combustible (2), une différence entre le couple délivré par le moteur (4) par la première commande et le couple à délivrer par le moteur (4) après la commutation de la commande de moteur de la première commande à la deuxième commande devient inférieure à une différence donnée.

7. Système de commande selon la revendication 5 ou 6, le dispositif de commande (20) étant configuré pour faire passer l'élément d'engagement par friction de l'état libéré à l'état de glissement en réponse à la demande de démarrage du moteur à combustible (2), et pour faire passer l'élément d'engagement par friction de l'état de glissement à l'état engagé après le démarrage du moteur à combustible (2),
la condition de commutation de la commande de moteur incluant une condition selon laquelle le passage de l'élément d'engagement par friction de l'état de glissement à l'état engagé est achevé.

8. Système de commande selon l'une quelconque des revendications 5 à 7, comprenant en outre un système de groupe propulseur (8) prévu entre le moteur (4) et une roue du véhicule (12) et configuré pour transmettre la force motrice par l'intermédiaire d'un engrenage,
la condition de commutation de la commande de moteur incluant une condition selon laquelle, après le démarrage du moteur à combustible (2), l'engrenage du système de groupe propulseur (8) devient dans un état donné sans jeu d'engrènement.

9. Véhicule hybride (1) comprenant le système de commande selon l'une quelconque des revendications 5 à 8.
